# EUROPEAN PATENT APPLICATION

(11) **EP 3 379 477 A1**
(43) Date of publication of application: **26.09.2018**
(21) Application number: 18163587.1
(22) Date of filing: 23.03.2018
(51) Int. Cl.: G06Q 20/20, G06Q 20/40

(54) **POINT-OF-SALE TERMINAL HAVING A DYNAMICALLY SET USER INTERFACE**

(30) Priority: 24.03.2017 JP 2017058424
(71) Applicant: Toshiba TEC Kabushiki Kaisha, Tokyo 141-0032 (JP)
(72) Inventor: Kobayashi, Tohru, Tokyo, 141-8562 (JP)
(74) Representative: Hoffmann Eitle

(57) **Abstract**

A point-of-sale (POS) terminal having a dynamically settable user interface, includes a display on which a user interface for operating the POS terminal is displayed, a camera by which an image of an operator of the POS terminal is captured, and a processor configured to process the captured image to identify the operator, retrieve user interface settings of the identified operator from a storage unit, and update the user interface displayed on the display based on the retrieved user interface settings.

## Description

### FIELD

Embodiments described herein relate generally to a point-of-sale terminal having a dynamically set user interface.

### BACKGROUND

In the related art, there is a case where a self-service POS (point-of-sales) terminal is installed where a customer himself/herself becomes an operator and performs sales data processing of commodities and the like in a store such as a supermarket. In such a store, there is a case where a plurality of self-service POS terminals in which user interfaces are installed in order to urge use of the self-service POS terminal.

Meanwhile, a technique for outputting a different sound volume for each operator by registering the sound volume preference of the operator before use is disclosed. However, in general, customers operating a self-service POS terminal do not like an increase in the number of operation procedures and thus there is a concern that promotion of the use of the self-service POS terminal would be hindered by requiring such a registration from the customers before use.

### SUMMARY OF THE INVENTION

The object of the present disclosure is to provide an improved point-of-sale terminal, an improved method of dynamically setting a user interface of a point-of-sale (POS) terminal, and an improved non-transitory computer readable medium comprising instructions to be executed in a point-of-sale terminal.

According to a terminal embodiment, a point-of-sale (POS) terminal having a dynamically settable user interface, comprising:
a display on which a user interface for operating the POS terminal is displayed;
a camera by which an image of an operator of the POS terminal is captured; and
a processor configured to process the captured image to identify the operator, retrieve user interface settings of the identified operator from a storage unit, and update the user interface displayed on the display based on the retrieved user interface settings.

The POS terminal may further be such that
the user interface settings include a screen setting that designates a theme for the user interface, a character size setting that designates a size of characters displayed in the user interface, an arrangement setting that designates a screen template for the user interface, and a color arrangement setting that designates a color scheme for the user interface.

The POS terminal may further comprise:
a voice output unit, wherein the user interface settings include a voice setting that designates sounds, including uttered words, that are produced through the voice output unit in response to various operations performed on the user interface.

The POS terminal may further be such that
the processor is configured to extract feature data of a face from the captured image, and the extracted feature data are compared with feature data stored in a registered user table to identify the operator.

The POS terminal may further comprise:
a communication interface connected to a network, wherein the processor controls the communication interface to transmit the extracted feature data to a server and receive in response thereto the user interface settings of the operator.

The POS terminal may further be such that
the processor, in response to a change of the user interface settings, controls the communication interface to transmit the changed user interface settings to the server for storage in the registered user table.

According to a method embodiment, a method of dynamically setting a user interface of a point-of-sale (POS) terminal, said comprising:
capturing an image of an operator of the POS terminal;
processing the captured image to identify the operator;
retrieving user interface settings of the identified operator from a storage unit; and
displaying the user interface on a display of POS terminal based on the retrieved user interface settings.

The method may further be such that
the user interface settings include a screen setting that designates a theme for the user interface, a character size setting that designates a size of characters displayed in the user interface, an arrangement setting that designates a screen template for the user interface, and a color arrangement setting that designates a color scheme for the user interface.

The method may further be such that
the user interface settings include a voice setting that designates sounds, including uttered words, that are produced through a voice output unit of the POS terminal in response to various operations performed on the user interface.

The method may further comprise:
extracting feature data of a face from the captured image,
wherein the extracted feature data are compared with feature data stored in a registered user table to identify the operator.

The method may further comprise:
transmitting the extracted feature data to a server; and
receiving in response thereto the user interface settings of the operator.

The method may further comprise:
in response to a change of the user interface settings, transmitting the changed user interface settings to the server for storage in the registered user table.

According to a non-transitory computer readable medium embodiment, a non-transitory computer readable medium comprising instructions to be executed in a point-of-sale terminal, wherein the instructions when executed in the POS terminal cause the POS terminal to carry out a method of dynamically setting a user interface, said method comprising:
capturing an image of an operator of the POS terminal;
processing the captured image to identify the operator;
retrieving user interface settings of the identified operator from a storage unit; and
displaying the user interface on a display of POS terminal based on the retrieved user interface settings.

The non-transitory computer readable medium may further be such that
the user interface settings include a screen setting that designates a theme for the user interface, a character size setting that designates a size of characters displayed in the user interface, an arrangement setting that designates a screen template for the user interface, and a color arrangement setting that designates a color scheme for the user interface.

The non-transitory computer readable medium may further be such that
the user interface settings include a voice setting that designates sounds, including uttered words, that are produced through a speaker voice output unit of the POS terminal in response to various operations performed on the user interface.

The non-transitory computer readable medium may further be such that said method further comprises:
extracting feature data of a face from the captured image,
wherein the extracted feature data are compared with feature data stored in a registered user table to identify the operator.

The non-transitory computer readable medium may further be such that said method further comprises:
transmitting the extracted feature data to a server; and
receiving in response thereto the user interface settings of the operator.

The non-transitory computer readable medium may further be such that said method further comprises:
in response to a change of the user interface settings, transmitting the changed user interface settings to the server for storage in the registered user table.

### DESCRIPTION OF THE DRAWINGS

FIG. 1 is a schematic diagram illustrating an example of a self-service checkout system according to an embodiment.
FIG. 2 is a perspective view of a self-service POS terminal when viewed from an operator's side.
FIG. 3 is a block diagram illustrating an example of a hardware configuration of the self-service POS terminal.
FIG. 4 is a block diagram illustrating an example of a hardware configuration of a store server.
FIG. 5 is a diagram illustrating an example of a data structure for a registered user table.
FIG. 6 is a block diagram of functional units of the self-service checkout system.
FIG. 7 is a flowchart illustrating an example of sales data processing.

### DETAILED DESCRIPTION

Embodiments provide an POS terminal having a user interface that capable of being dynamically changed to settings of an operator of the POS terminal.

According to an embodiment, there is provided a POS terminal having a dynamically set user interface, includes an operation unit including a display on which a user interface for operating the POS terminal is displayed, a camera by which an image of an operator of the POS terminal is captured, and a processor configured to process the captured image to identify the operator, retrieve user interface settings of the identified operator from a storage unit, and update the user interface displayed on the display of the operation unit based on the retrieved user interface settings.

In the following, embodiments of an accounting device and an accounting method will be described in detail with reference to the accompanying drawings. The embodiment described below is an embodiment of the accounting device and the accounting method, and is not intended to be limiting. A self-service point-of-sales (POS) terminal included in a self-service checkout system is one example of the accounting device of the embodiment.

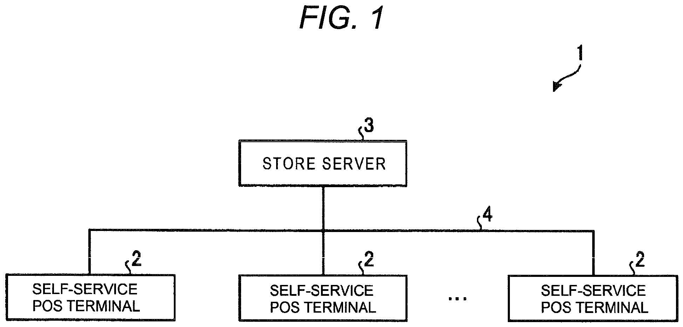

FIG. 1 is a schematic diagram illustrating an example of a self-service checkout system 1 according to an embodiment. The self-service checkout system 1 includes a self-service POS terminal 2 and a store server 3. The self-service POS terminal 2 and the store server 3 are connected to each other via a network 4. For example, the network 4 is a wired or wireless in-store local area network (LAN). The self-service checkout system 1 illustrated in FIG. 1 includes a plurality of self-service POS terminals 2, but a single self-service POS terminal 2 may be used.

The self-service POS terminal 2 is a sales data processing device that performs sales data processing by a customer himself/herself who becomes an operator at a store such as a supermarket. The self-service POS terminal 2 may also be an accounting device so that the customer himself/herself performs sales registration processing for registering commodities to be purchased or the like and accounting processing for commodities subjected to sales registration and the like.

The store server 3 is, for example, a server device such as a personal computer. The store server 3 authenticates whether the customer who uses the self-service POS terminal 2 is a customer who is registered as a user, as a customer who uses a function of changing setting contents of a user interface of the self-service POS terminal 2 or not. In a case where the customer is a registered user, the store server 3 transmits settings of the customer to the self-service POS terminal 2. The store server 3 may be configured with a plurality of server devices or the like. Furthermore, the store server 3 may be provided by a cloud service or the like that provides computer resources such as hardware and software.

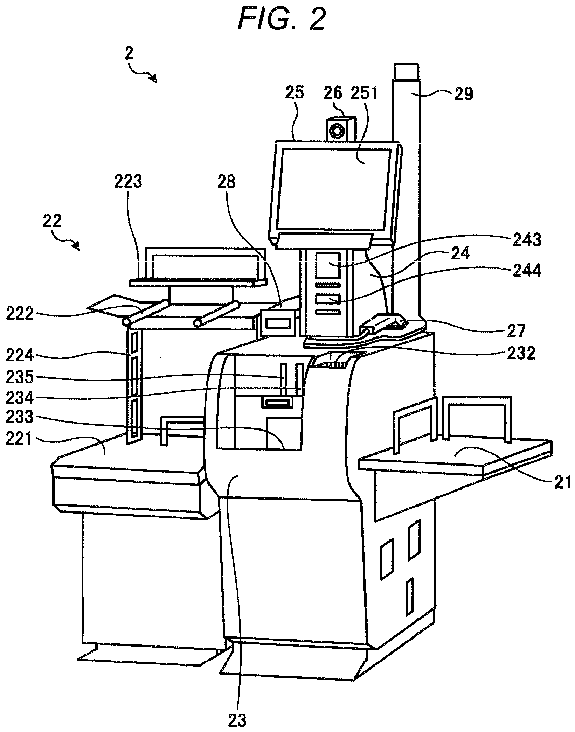

Next, the self-service POS terminal 2 will be described. FIG. 2 is a perspective view of the self-service POS terminal 2 when viewed from an operator side.

The self-service POS terminal 2 includes a first loading stand 21 provided on a front right side, a second loading stand 22 provided on a front left side, and a first casing 23 provided at the front center. An operator such as a customer places a basket containing collected commodities on the first loading stand 21. The operator places a bag in which the commodities subjected to sales registration are placed, on the second loading stand 22. The operator performs sales registration for the commodity taken out of the basket by using a device placed on the first casing 23. The operator puts the commodity subjected to sales registration into the bag placed on the second loading stand 22. The operator performs the sales registration for each commodity collected in the basket. In a case where sales registration of all the commodities is completed, the operator performs accounting processing of the commodities subjected to sales registration and the like using a device included in the first casing 23. According to the procedure described above, the operator performs sales registration processing and accounting processing.

More specifically, the second loading stand 22 includes a pedestal 221, a bagging hook 222, and a temporary stand 223. The bagging hook 222 and the temporary stand 223 are supported on a pillar 224 provided on the pedestal 221 and are provided above the pedestal 221. The pedestal 221 is, for example, a stand on which commodities or the like unsuitable for putting into the bag, e.g., commodities larger than the bag, are placed. The bagging hook 222 is a hook that suspends the bag in which the commodity subjected to sales registration is put. The temporary stand 223 is, for example, a stand for temporarily placing the commodity requiring attention during bagging, e.g., fragile commodities or the like.

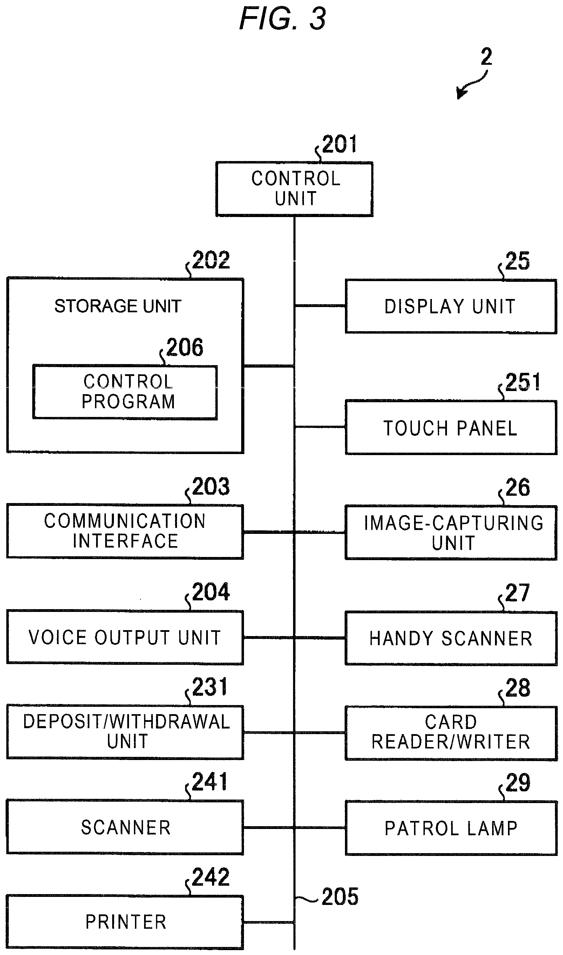

The first casing 23 includes a deposit/withdrawal unit 231 (see FIG. 3) for performing deposit and withdrawal of coins, bills, and the like, therein. Further, the first casing 23 includes a coin insertion port 232, a coin payout port 233, a bill insertion port 234, and a bill payout port 235. The coin insertion port 232 is a coin deposit port of the deposit/withdrawal unit 231 into which coins are to be deposited by the customer as payment for the commodities. The coin payout port 233 is a coin payout port of the deposit/withdrawal unit 231 from which coins are to be withdrawn as change. The bill insertion port 234 is a bill deposit port of the deposit/withdrawal unit 231 into which bills are to be deposited by the customer as payment for commodities. The bill payout port 235 is a bill payout port of the deposit/withdrawal unit 231 from which bills are to be withdrawn as change.

The self-service POS terminal 2 includes a second casing 24, a display unit 25, a handy scanner 27, a card reader/writer 28, and a patrol lamp 29 on the upper surface of the first casing 23.

The second casing 24 includes a scanner 241 (see FIG. 3) and a printer 242 (see FIG. 3) therein. Further, the second casing 24 supports the display unit 25 provided on the upper portion of the second casing 24.

The second casing 24 includes a reading window 243 used for reading a commodity code or the like of a commodity by the scanner 241. The reading window 243 transmits laser light emitted from the scanner 241 to the outside of the second casing 24 and transmits reflected light of the laser light to the inside of the second casing 24. The scanner 241 may capture an image of the commodity to read the commodity code or the like from the captured image.

The second casing 24 includes a receipt issuing port 244 for ejecting a receipt or the like output by the printer 242. The printer 242 ejects the receipt in which the sales information of the commodity subjected to transaction processing is printed on paper from the receipt issuing port 244.

The display unit 25 is, for example, a liquid crystal display. The display unit 25 displays commodity information or the like of the commodity subjected to sales registration. Further, the display unit 25 includes a touch panel 251 (see FIG. 3) for operating the self-service POS terminal 2. The touch panel 251 detects a position where an operation is performed (e.g., touched) on the display unit 25 and determines that an operation corresponding to a display element displayed by the display unit 25 is input. With this, the touch panel 251 receives an operation of a key (assuming that the key displayed by the display unit 25 is operated). The display unit 25 supports the image-capturing unit 26 provided on the upper part of the display unit 25.

The image-capturing unit 26 is a camera including an image-capturing element such as a complementary metal-oxide semiconductor (CMOS) or a charge coupled device (CCD). The image-capturing unit 26 captures an image of the face of the operator who operates the self-service POS terminal 2.

The handy scanner 27 is a hand-held scanner. The handy scanner 27 is used in a case where it is difficult to hold the commodity over the reading window 243, such as a case where the commodity is heavy or a case where the commodity is large.

The card reader/writer 28 is a device that executes reading and writing of information stored in a storage medium of a card such as a credit card used for settlement.

The patrol lamp 29 is a warning light for notifying a clerk that abnormality or the like occurs in the self-service POS terminal 2. For example, in a case where abnormality occurs in the self-service POS terminal 2, the patrol lamp 29 blinks in red or the like.

Next, the hardware configuration of various devices included in the self-service checkout system 1 will be described.

FIG. 3 is a block diagram illustrating an example of a hardware configuration of the self-service POS terminal 2. The self-service POS terminal 2 includes a control unit 201, a storage unit 202, a communication interface 203, a voice output unit 204, the deposit/withdrawal unit 231, the scanner 241, the printer 242, the display unit 25, the touch panel 251, the image-capturing unit 26, the handy scanner 27, the card reader/writer 28, and the patrol lamp 29. These respective units are connected to each other via a system bus 205 such as a data bus and an address bus.

The control unit 201 is a computer that controls the entire operation of the self-service POS terminal 2 and performs various functions of the self-service POS terminal 2. The control unit 201 includes a central processing unit (CPU), a read only memory (ROM), and a random access memory (RAM) . The CPU comprehensively controls the operation of the self-service POS terminal 2. The ROM is a storage medium that stores various programs and data. The RAM is a storage medium that temporarily stores various programs and rewrites various data. The CPU executes the program stored in the ROM, the storage unit 202, or the like by using the RAM as a work area.

The storage unit 202 is a storage device such as a hard disk drive (HDD) or a solid state drive (SSD). The storage unit 202 stores a control program 206. The control program 206 is a program executed by the CPU of the control unit 201 to perform the functions of the operating system and the self-service POS terminal 2. The control program 206 includes a program executed by the CPU of the control unit 201 to perform the characteristic functions according to the present embodiment.

The communication interface 203 may be an interface for communicating with the store server 3 via the network 4.

The voice output unit 204 may be a speaker or the like for producing various sounds.

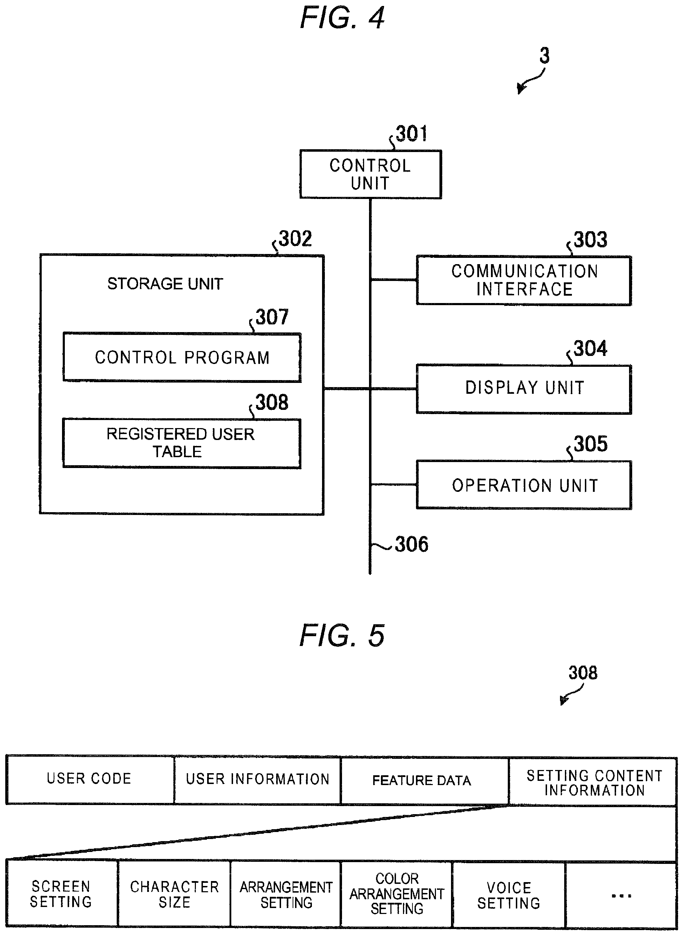

FIG. 4 is a block diagram illustrating an example of a hardware configuration of the store server 3. The store server 3 includes a control unit 301, a storage unit 302, a communication interface 303, a display unit 304, and an operation unit 305. These respective units are connected to each other via a system bus 306 such as a data bus or an address bus.

The control unit 301 is a computer that controls the entire operation of the store server 3 and performs various functions of the store server 3. The control unit 301 includes a CPU, a ROM, and a RAM. The CPU comprehensively controls the operation for the store server 3. The ROM is a storage medium that stores various programs and data. The RAM is a storage medium that temporarily stores various programs and rewrites various data. The CPU executes the program stored in the ROM, the storage unit 302, or the like by using the RAM as a work area.

The storage unit 302 is a storage device such as an HDD or an SSD. The storage unit 302 stores a control program 307 and a registered user table 308. The control program 307 is a program executed by the CPU of the control unit 301 to perform the functions of the operating system and the self-service POS terminal 2. The control program 307 includes a program executed by the CPU of the control unit 301 to perform the characteristic functions according to the present embodiment.

FIG. 5 is an explanatory diagram illustrating an example of a data structure for the registered user table 308. The registered user table 308 is an information table in which customers who use the function of changing setting contents of the user interface (user interface settings) of the self-service POS terminal 2, are registered. For example, the user interface is a screen to be displayed on the display unit 25, sound or uttered words output through the voice output unit 204, or the like. The registered user table 308 stores a user code, user information, a feature data, and setting content information in association with each other. The user code is identification information capable of identifying the user. User information provides information about the user, e.g., name, age, gender, or the like. The feature data is a feature data of each part of a face of a customer extracted from an image of the face of the registered customer. That is, the feature data is a feature data of an eye, a nose, a mouth or the like extracted from an image of the face of the customer. For example, the feature data is an arrangement of respective parts, a size of each part, and the like.

The setting content information is information indicating setting contents of the user interface. The setting content information includes screen setting, character size, arrangement setting, color arrangement setting, and voice setting. The screen setting provides the setting of a theme of a screen displayed on the display unit 25 of the self-service POS terminal 2. For example, in a case where a game character is set as the screen setting, the self-service POS terminal 2 causes the display unit 25 to display a screen on which the set character is displayed on a background image. The screen setting is not limited to the character of the game, but may be any content such as a comic book, a movie, a sport, a singer, and the like. The character size is setting of the size of the character to be displayed on the display unit 25 of the self-service POS terminal 2. The arrangement setting is setting for selecting a screen template displayed on the display unit 25 of the self-service POS terminal 2. In the template, arrangement of respective components included in the screen is defined. For example, in the template, arrangement for displaying an operation button, a list, and a price display field is defined. The color arrangement setting allows selection of a color of the screen displayed on the display unit 25 of the self-service POS terminal 2. The voice setting is setting of the sound or uttered words output through the voice output unit of the self-service POS terminal 2. For example, the voice setting corresponds to a voice notifying that the sales registration is made in a case where the handy scanner 27 reads the commodity code, a voice notifying that various operations are received, and the like.

Returning to FIG. 4, the communication interface 303 is an interface for communicating with the self-service POS terminal 2 via the network 4.

The display unit 304 is, for example, a liquid crystal display device. The operation unit 305 is an input device such as a keyboard and a mouse.

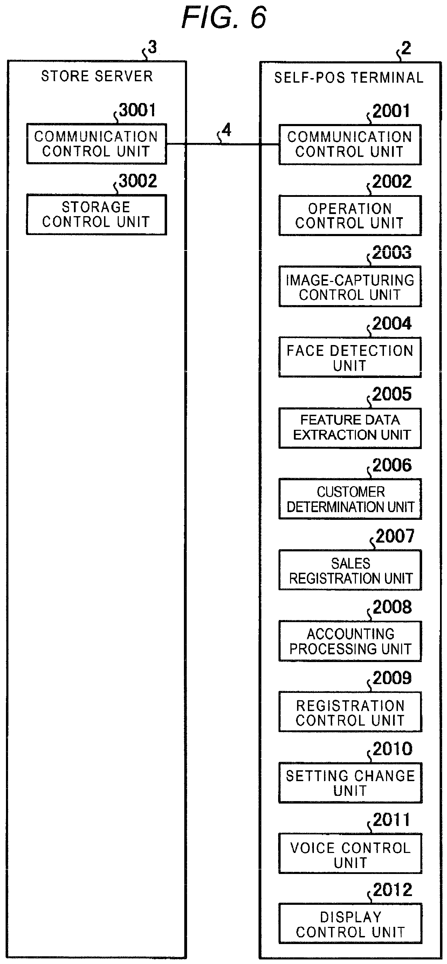

Next, characteristic functions of each device included in the self-service checkout system 1 will be described. FIG. 6 is a block diagram illustrating an example of the characteristic functions of each device included in the self-service checkout system 1.

First, the characteristic functions of the self-service POS terminal 2 will be described. The CPU of the control unit 201 loads the control program 206 of the storage unit 202 into the RAM and operates in accordance with the control program 206, thereby realizing the respective functional units illustrated in FIG. 6 on the RAM. Specifically, the control unit 201 includes, as functional units, a communication control unit 2001, an operation control unit 2002, an image-capturing control unit 2003, a face detection unit 2004, a feature data extraction unit 2005, a customer determination unit 2006, a sales registration unit 2007, an accounting processing unit 2008, a registration control unit 2009, a setting change unit 2010, a voice control unit 2011, and a display control unit 2012.

The communication control unit 2001 controls the communication interface 203 to communicate with the store server 3 connected via the network 4.

The operation control unit 2002 controls the touch panel 251 to receive various operations.

The image-capturing control unit 2003 is an example of an image-capturing control unit that controls the image-capturing unit 26 to capture an image. That is, the image-capturing control unit 2003 causes the image-capturing unit 26 to capture an image of the face of the customer who operates the self-service POS terminal 2.

The face detection unit 2004 detects a face from the image captured by the image-capturing unit 26. Then, the face detection unit 2004 extracts a face area indicating an area, in which the face is photographed, from the image captured by the image-capturing unit 26. For example, the face detection unit 2004 scans the image captured by the image-capturing unit 26 to detect parts of the face such as eyes, nose, mouth, and the like. The face detection unit 2004 compares the arrangement of respective detected parts and data prepared in advance by pattern matching or the like to detect the face. The face detection unit 2004 extracts the face area of the detected face.

The feature data extraction unit 2005 extracts a feature data of the face from the face area of the face detected by the face detection unit 2004.

The customer determination unit 2006 determines whether the customer is a user registered in the registered user table 308 by using the feature data extracted by the feature data extraction unit 2005 or not. Furthermore, in a case where the customer is a registered user, the customer determination unit 2006 identifies which customer in the registered user table 308 is the customer. For example, the customer determination unit 2006 causes the communication control unit 2001 to transmit a registration determination request to the store server 3 to inquire whether the customer is a registered user or not. The registration determination request includes the feature data of the face of the customer extracted by the feature data extraction unit 2005. The store server 3 determines whether the customer is a registered user according to whether the feature data included in the registration determination request is stored in the registered user table 308 or not. The customer determination unit 2006 determines, based on the determination result transmitted from the store server 3, whether the customer is a registered user or not. Furthermore, the customer determination unit 2006 identifies which customer in the registered user table 308 is the customer. In the case where the customer is a registered user, the determination result transmitted from the store server 3 includes setting content information of the customer. That is, the customer determination unit 2006 extracts the setting content information of the customer from the registered user table 308 by causing the communication control unit 2001 to transmit the registration determination request.

The sales registration unit 2007 controls sales registration processing for registering commodities to be sold. For example, the sales registration unit 2007 performs sales registration of the commodity of the commodity code read by the scanner 241 or the handy scanner 27.

The accounting processing unit 2008 executes accounting processing of the commodity subjected to the sales registration in sales data processing pertaining to one transaction. For example, the accounting processing unit 2008 calculates a total amount of the commodities subjected to the sales registration. The accounting processing unit 2008 causes the deposit/withdrawal unit 231 to eject change.

The registration control unit 2009 controls new registration of the customer who is not yet registered as a user and change of setting content information for the registered customer. In a case where an operation for changing setting contents of the user interface is received for a customer who is not yet registered as a user, the registration control unit 2009 makes request for user registration of a customer. That is, the registration control unit 2009 causes the display control unit 2012 to display a screen requesting input of user information of the customer. The registration control unit 2009 requests the feature data extraction unit 2005 to extract the feature data of the face of the customer from the image captured by the image-capturing unit 26 caused by the image-capturing control unit 2003. Furthermore, the registration control unit 2009 causes the display control unit 2012 to display a screen requesting to change the setting contents of the user interface. The registration control unit 2009 causes the communication control unit 2001 to transmit the user registration request including input user information, the feature data of the extracted face of the customer, and the setting content information indicating the changed setting content.

In a case where the setting content information of the registered customer is changed, the registration control unit 2009 causes the display control unit 2012 to display a screen requesting to change the setting contents of the user interface. The registration control unit 2009 causes the communication control unit 2001 to transmit a setting change request including the user code of the customer and the setting content information indicating the changed setting contents.

The setting change unit 2010 controls setting of the user interface. In a case where the customer determination unit 2006 determines that the customer is a registered user, the setting change unit 2010 changes the setting of the user interface of the device to the setting content indicated by the setting content information of the customer transmitted from the store server 3. On the other hand, in a case where the customer determination unit 2006 determines that the customer is not a registered user, the setting change unit 2010 maintains the initial setting. Here, the initial setting is a setting content of the user interface which is set in advance.

The voice control unit 2011 controls the voice output unit 204 to control output of various voices. For example, in a case where the scanner 241 or the handy scanner 27 reads the commodity code or the like capable of identifying the commodity, the voice control unit 2011 generates a read sound. In a case where the operation control unit 2002 receives various operations, the voice control unit 2011 generates an operation sound indicating that the operation is received. In a case where an incorrect operation or the like is received, the voice control unit 2011 generates an alarm sound or the like.

Then, the voice control unit 2011 causes various voices to be output as a user interface based on the setting contents of the user interface. For example, the voice control unit 2011 generates the voice defined in the voice setting of the setting contents. That is, in a case where the setting change unit 2010 changes the setting contents of the user interface, the voice control unit 2011 generates the voice based on the voice setting of the changed setting contents.

The display control unit 2012 controls the display unit 25 to display various screens. For example, the display control unit 2012 causes the display unit 25 to display an image capture screen, a menu screen, and an operation screen. The image capture screen is a screen for displaying the image captured by the image-capturing unit 26 caused by the image-capturing control unit 2003. The face detection unit 2004 may not be able to detect a face unless the image corresponds to an image at the time when the customer directs his/her face to the image-capturing unit 26. The display control unit 2012 causes the image captured by the image-capturing unit 26 in the image capture screen to be displayed on the captured image so as to assist the customer to direct his/her face to the image-capturing unit 26.

Meanwhile, some customers do not want their faces displayed on the display unit 25. However, in a case where the customer is identified from the image of the face, the self-service POS terminal 2 needs an image in which a front face of the customer is captured. For that reason, it is necessary for the customer to adjust an orientation of the face and a position of the face from the image captured by the image-capturing unit 26. Accordingly, the self-service POS terminal 2 is required to display the image of the face of the customer captured by the image-capturing unit 26 on the display unit 25. The image capture screen includes an avatar change button. The avatar change button is a button for changing the image into the face of the customer to display a character or the like. When the avatar change button is pushed down, the display control unit 2012 changes the customer to a character image or the like to be displayed. Accordingly, in a case where the face of the customer included in the image moves, the display control unit 2012 also moves the image of the character similarly. Furthermore, in a case where the orientation of the face of the customer included in the image is changed, the display control unit 2012 also changes the orientation of the image of the character similarly. As such, the display control unit 2012 can display the character image or the like instead of the face of the customer so as to make it possible to capture a necessary image while resolving customer dissatisfaction.

A menu screen is a screen for selecting whether to change the setting contents of the user interface or to start sales registration. An operation screen is a screen for receiving various operations. For example, the operation screen is a sales registration screen, an accounting screen, or the like. The sales registration screen is a screen for displaying the commodity code read by the scanner 241 or the handy scanner 27 and an image urging an operation for sales registration. The accounting screen is a screen for displaying the total amount of the commodities subjected to sales registration, change, and images for urging an operation for accounting processing.

The display control unit 2012 causes various screens such as an operation screen as a user interface to be displayed based on the setting contents of the user interface. For example, the display control unit 2012 causes a theme screen to be displayed based on screen setting of the setting contents. That is, the display control unit 2012 causes a screen having a background image of the theme to be displayed based on the screen setting of the setting contents. The display control unit 2012 causes a screen in which a size of characters is changed to be displayed based on the character size of the setting content. The display control unit 2012 causes a screen in which arrangement of respective images is changed to be displayed based on arrangement setting of the setting contents . The display control unit 2012 causes a screen in which the color arrangement is changed to be displayed based on color arrangement setting of the setting content.

Next, the characteristic functions of the store server 3 will be described. The CPU of the control unit 301 loads the control program 307 of the storage unit 302 in the RAM and operates in accordance with the control program 307 so as to realize each functional unit illustrated in FIG. 6 on the RAM. Specifically, the control unit 301 includes a communication control unit 3001 and a storage control unit 3002 as functional units.

The communication control unit 3001 controls the communication interface 303 to communicate with the self-service POS terminal 2 connected via the network 4.

The storage control unit 3002 manages the registered user table 308. For example, in a case where the communication control unit 3001 receives a user registration request, the storage control unit 3002 allocates a user code. The storage control unit 3002 stores user information, the feature data, and the setting content information included in the user registration request in the registered user table 308 in association with the allocated user code. In a case where the communication control unit 3001 receives the setting change request, the storage control unit 3002 extracts the user code which coincides with the user code included in the setting change request from the registered user table 308. The storage control unit 3002 changes the setting content information associated with the extracted user code to the setting content information included in the setting change request.

In a case where the communication control unit 3001 receives the registration determination request, the storage control unit 3002 determines whether a feature data matching the feature data included in the registration determination request is registered in the registered user table 308 or not. In a case where the matching feature data is stored in the registered user table 308, the storage control unit 3002 causes the communication control unit 3001 to transmit a determination result indicating that the user is a registered user. The determination result indicating that the user is a registered user includes the setting content information stored in the registered user table 308. On the other hand, in a case where the matching feature data is not stored in the registered user table 308, the storage control unit 3002 causes the communication control unit 3001 to transmit a determination result indicating that the user is not a registered user. The storage control unit 3002 is not limited to a case where the feature data completely match, but may determine that the feature data are registered in the registered user table 308 in a case where the feature data are similar to each other to a certain extent or more.

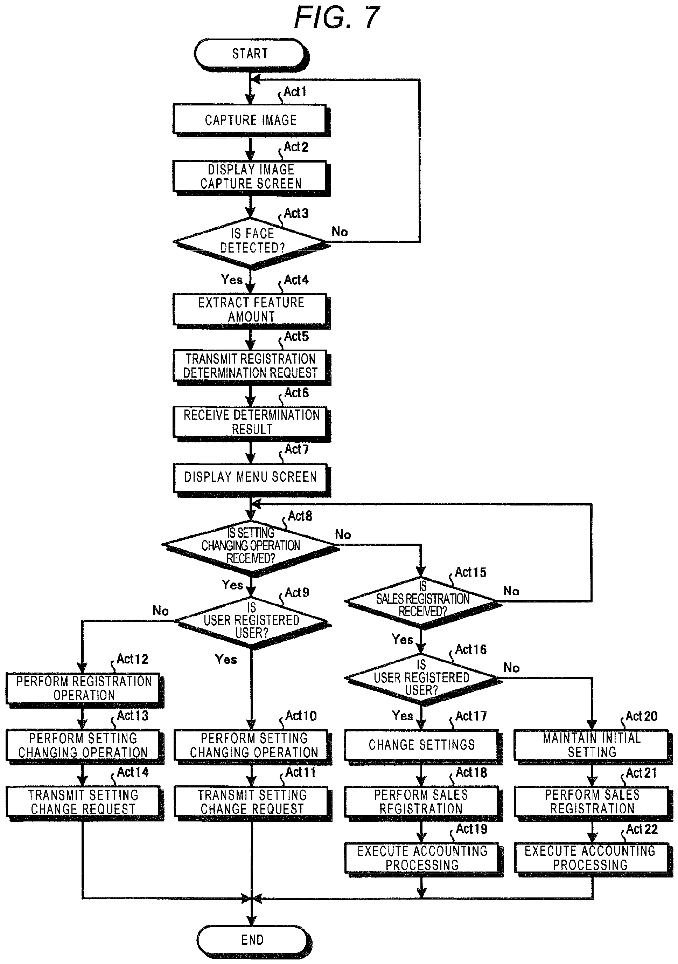

Next, sales data processing to be executed by the self-service POS terminal 2 will be described. Here, FIG. 7 is a flowchart illustrating an example of sales data processing to be executed by the self-service POS terminal 2 of the present embodiment.

The image-capturing control unit 2003 causes the image-capturing unit 26 to capture an image (Act1). The display control unit 2012 causes the display unit 25 to display the image capture screen displaying the image captured by the image-capturing unit 26 (Act2).

On condition that the face of the customer cannot be detected from the captured image (No in Act3), the self-service POS terminal 2 proceeds to Act1 and causes an image to be captured again. On the other hand, on condition that the face detection unit 2004 detects the face from the captured image (Yes in Act3), the feature data extraction unit 2005 extracts the feature data of the detected face from the image in which the face is detected (Act4).

The communication control unit 2001 transmits a registration determination request including the extracted feature data to the store server 3 (Act5). That is, the communication control unit 2001 inquires whether the customer of the detected face is a customer who is registered as a user or not.

The communication control unit 2001 receives the determination result as to whether the customer is a customer who is registered as a user or not (Act6).

The display control unit 2012 causes the menu screen to be displayed (Act7). The operation control unit 2002 determines whether an operation for changing the setting contents of the user interface is received on the menu screen or not (Act8).

On condition that the operation for changing the setting contents is received on the menu screen (Yes in Act8), the customer determination unit 2006 determines, based on the determination result received in Act6, whether the customer is a registered user or not (Act9).

On condition that the customer is a user who is registered (Yes in Act9), the operation control unit 2002 receives an operation for changing the setting content information (Act10). When the operation for changing the setting content information is completed, the communication control unit 2001 transmits a setting change request including changed setting content information to the store server 3 (Act11).

On condition that the customer is not a registered user in Act9 (No in Act9), the operation control unit 2002 receives the operation for registering user information and a feature data of the face of the customer (Act12). Here, the feature data may be extracted from the image captured in Act1, or may be extracted from a separately captured image. The operation control unit 2002 receives an operation for changing setting content information (Act13). When the operation for changing the setting content information is completed, the communication control unit 2001 transmits the setting change request including the user information, the feature data, and the setting content information to the store server 3 (Act14).

On condition that the operation control unit 2002 is not yet received the operation for changing the setting content in Act8 (No in Act8), the operation control unit 2002 determines whether an operation for starting sales registration is received or not (Act15). On condition that the operation for starting sales registration is not received (No in Act15), the self-service POS terminal 2 proceeds to Act8 and waits until the operation is received.

On condition that the operation for starting sales registration is received (Yes in Act15), the customer determination unit 2006 determines, based on the determination result received in Act6, whether the customer is a user who is registered or not (Act16).

On condition that the customer is the user who is registered (Yes in Act16), the registration control unit 2009 changes the setting contents of the user interface to setting indicated by the setting content information included in the determination result received in Act6 (Act17). The sales registration unit 2007 performs sales registration using the user interface of the setting indicated by the setting content information (Act18). The accounting processing unit 2008 executes accounting processing using the user interface of the setting indicated by the setting content information (Act19).

On the other hand, on condition that the customer is not a registered user (No in Act16), the registration control unit 2009 maintains initial setting of the user interface (Act20). The sales registration unit 2007 performs sales registration using the user interface having the initial setting (Act21) . The accounting processing unit 2008 executes accounting processing using the user interface having the initial setting (Act22).

As described above, the self-service POS terminal 2 ends sales data processing.

As described above, according to the self-service checkout system 1 according to the present embodiment, the self-service POS terminal 2 identifies a customer based on the image captured by the image-capturing unit 26. The self-service POS terminal 2 extracts setting contents of the user interface of the identified customer from the registered user table 308 and sets the setting contents. The voice control unit 2011 and the display control unit 2012 output a sound or voice and a screen as a user interface based on the setting contents of the user interface. Accordingly, the self-service POS terminal 2 according to the embodiment is capable of being easily changed to settings according to an operator.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

In the embodiment described above, the case where the accounting device is applied to the self-service POS terminal 2 is described as an example. The accounting device may be applied to devices other than the self-service POS terminal 2. For example, the accounting device can be applied to a registration device of a semi self-service checkout system in which a clerk performs sales registration by using the registration device and the customer himself/herself performs accounting processing by using the accounting device.

In the above embodiment, the case where the registered user table 308 is stored in the storage unit 302 of the store server 3 is described as an example. The registered user table 308 may be stored in a storage unit of a device other than the store server 3. For example, the registered user table 308 may be stored in the storage unit 202 of the self-service POS terminal 2. In this case, the store server 3 may distribute the registered user table 308 to each self-service POS terminal 2 at a predetermined time or the like.

In the embodiment described above, the case where the self-service POS terminal 2 receives an operation for changing setting contents of the user interface is described as an example. The operation for changing the setting contents of the user interface may be received by a device other than the self-service POS terminal 2. For example, an information processing apparatus such as a customer's smartphone or a personal computer may receive the operation for changing setting contents of the user interface. In this case, the information processing apparatus may transmit a setting change request to the store server 3. The storage control unit 3002 of the store server 3 may update the registered user table 308 in response to the setting change request. In a case where the operation for changing setting contents of the user interface is received, the information processing apparatus may designate an image prepared by the customer as a background image or the like. With this, in a case where the information processing apparatus is provided with an image-capturing unit, the image captured by the information processing apparatus can be designated as the background image or the like.

In the embodiment described above, the customer determination unit 2006 identifies a customer from the image of the face of the customer. However, the customer determination unit 2006 may specify the customer based on other biometric information included in the image captured by the image-capturing unit 26 without being limited to the face of the customer. For example, the customer determination unit 2006 may specify the customer by retina or the like of the customer.

The programs to be executed by each device of the embodiments and the modification examples are assumed to be provided by being incorporated in a storage medium included in each device in advance, but the present invention is not limited thereto. For example, a configuration in which the programs may be provided in a file having an installable format or an executable format so as to be recorded in a computer readable recording medium such as a CD-ROM, a flexible disk (FD), a CD-R, a digital versatile disk (DVD) may be adopted. Furthermore, the storage medium is not limited to a medium independent of a computer or an incorporated system, but may include a storage medium in which a program transmitted by a LAN, the Internet, or the like is stored by being downloaded or is temporarily stored.

A configuration in which the programs to be executed by the devices of the embodiments and the modification examples described above are stored on a computer connected to a network such as the Internet and are provided by being downloaded via the network or are provided or distributed via the network such as the Internet may be adopted.

## Claims

1. A point-of-sale (POS) terminal (2) having a dynamically settable user interface, comprising:
a display (25) on which a user interface for operating the POS terminal (2) is displayed;
a camera (26) by which an image of an operator of the POS terminal (2) is captured; and
a processor (201) configured to process the captured image to identify the operator, retrieve user interface settings of the identified operator from a storage unit (202), and update the user interface displayed on the display (25) based on the retrieved user interface settings.

2. The POS terminal (2) according to claim 1, wherein the user interface settings include a screen setting that designates a theme for the user interface, a character size setting that designates a size of characters displayed in the user interface, an arrangement setting that designates a screen template for the user interface, and a color arrangement setting that designates a color scheme for the user interface.

3. The POS terminal (2) according to claim 2, further comprising a voice output unit (204), wherein the user interface settings include a voice setting that designates sounds, including uttered words, that are produced through the voice output unit (204) in response to various operations performed on the user interface.

4. The POS terminal (2) according to one of claims 1 to 3, wherein the processor (201) is configured to extract feature data of a face from the captured image, and the extracted feature data are compared with feature data stored in a registered user table to identify the operator.

5. The POS terminal (2) according to claim 4, further comprising a communication interface (203) connected to a network, wherein the processor (201) controls the communication interface (203) to transmit the extracted feature data to a server and receive in response thereto the user interface settings of the operator.

6. The POS terminal (2) according to claim 5, wherein the processor (201) is configured to, in response to a change of the user interface settings, control the communication interface (203) to transmit the changed user interface settings to the server for storage in the registered user table.

7. A method of dynamically setting a user interface of a point-of-sale (POS) terminal (2), said comprising:
capturing an image of an operator of the POS terminal (2) ;
processing the captured image to identify the operator;
retrieving user interface settings of the identified operator from a storage unit (202); and
displaying the user interface on a display (25) of POS terminal (2) based on the retrieved user interface settings.

8. The method according to claim 7, wherein the user interface settings include a screen setting that designates a theme for the user interface, a character size setting that designates a size of characters displayed in the user interface, an arrangement setting that designates a screen template for the user interface, and a color arrangement setting that designates a color scheme for the user interface.

9. The method according to claim 8, wherein the user interface settings include a voice setting that designates sounds, including uttered words, that are produced through a voice output unit (204) of the POS terminal (202) in response to various operations performed on the user interface.

10. The method according to one of claims 7 to 9, further comprising:
extracting feature data of a face from the captured image,
wherein the extracted feature data are compared with feature data stored in a registered user table to identify the operator.

11. The method according to claim 10, further comprising:
transmitting the extracted feature data to a server; and
receiving in response thereto the user interface settings of the operator.

12. The method according to claim 11, further comprising:
in response to a change of the user interface settings, transmitting the changed user interface settings to the server for storage in the registered user table.

13. A non-transitory computer readable medium comprising instructions to be executed in a point-of-sale (POS) terminal (2), wherein the instructions when executed in the POS terminal (2) cause the POS terminal (2) to carry out a method according to one of claims 7 to 12.
